# EUROPÄISCHE PATENTSCHRIFT

(11) **EP 0 806 881 B1**
(45) Veröffentlichungstag und Bekanntmachung des Hinweises auf die Patenterteilung: **23.11.2005**
(21) Anmeldenummer: 97105981.1
(22) Anmeldetag: 11.04.1997
(51) Int. Cl.: H04Q 11/04, H04M 1/72, H04Q 7/24

(54) **Verfahren zur Verbindung von Teilnehmereinrichtungen, die mit niedrigerer Bitrate codierte Sprachsignale erzeugen und wiedergeben**
Method of connecting terminals that generate and reproduce low bitrate voice signals
Méthode de connexion des terminaux générant et reproduisant des signaux de parole à bas débit

(30) Priorität: 08.05.1996 DE 19618470
(43) Veröffentlichungstag der Anmeldung: 12.11.1997
(73) Patentinhaber: Deutsche Telekom AG, 53113 Bonn (DE)
(72) Erfinder: Adam, Christof, 64859 Eppertshausen (DE)
(74) Vertreter: Gornott, Dietmar

(56) Entgegenhaltungen:
- US-A- 5 497 396
- PATENT ABSTRACTS OF JAPAN vol. 1995, no. 08, 29. September 1995 (1995-09-29) & JP 07 131521 A (NEC CORP), 19. Mai 1995 (1995-05-19)

## Beschreibung

Die Erfindung betrifft ein Verfahren zur Verbindung von Teilnehmereinrichtungen, die mit niedrigerer Bitrate codierte Sprachsignale erzeugen und wiedergeben und mit Codewandlern für eine Übertragung über ein digitales Telekommunikationsnetz mit Kanälen höherer Bitrate versehen sind, und eine Teilnehmereinrichtung.

Für schnurlose Telefone mit einer digitalen Signalübertragung zwischen der Basisstation und den schnurlosen Telefonen ist der sogenannte DECT-Standard entwickelt worden (Digital European Cordless Telecommunications), der eine Codierung der Sprachsignale mit Hilfe von ADPCM (Adaptive Differenz-Puls-Code-Modulation) einschließt. Die Bitrate der ADPCM-codierten Sprachsignale beträgt 32 kbit/s. Werden DECT-Basisstationen an das ISDN (Integrated Services Digital Network) angeschlossen, so wird mit Hilfe von Codewandlern (Transcodern) die ADPCM mit einer Bitrate von 32 kbit/s in eine PCM mit einer Bitrate von 64 kbit/s und umgekehrt gewandelt. Dabei treten an sich unnötige Laufzeitverluste auf.

Aus US 5,497,396 ist ein Mobilfunknetz bekannt geworden, bei dem die Basisstationen (BTS) mit Transcodern versehen sind, die bei Gesprächen zwischen Mobilfunkgeräten abgeschaltet werden und bei Bedarf aktiviert werden können - beispielsweise, wenn Gespräche direkt in andere Netze geleitet werden. Dies erfodert jedoch eine entsprechende Infrastruktur des Netzes.

Aufgabe der Erfindung ist es, eine Verbindung zwischen Teilnehmereinrichtungen, die mit niedrigerer Bitrate codierte Sprachsignale erzeugen und wiedergeben, über ein digitales Telekommunikationsnetz miteinander zu verbinden, das Kanäle höherer Bitrate aufweist, ohne daß eine Transcodierung mit den damit verbundenen Nachteilen und eine auf die verschiedenen Bitraten ausgelegte Infrastruktur des Netzes erforderlich sind.

Diese Aufgabe wird bei einer ersten Ausführungsform des erfindungsgemäßen Verfahrens dadurch gelöst,
- daß beim Aufbau einer Verbindung von einer anrufenden Teilnehmereinrichtung, die mit der niedrigeren Bitrate codierte Sprachsignale erzeugt und wiedergibt, die anrufende Teilnehmereinrichtung der angerufenen Teilnehmereinrichtung signalisiert, daß die anrufende Teilnehmereinrichtung mit der niedrigeren Bitrate codierte Sprachsignale erzeugt und wiedergibt,
- daß eine angerufene Teilnehmereinrichtung, die ebenfalls mit der niedrigeren Bitrate codierte Sprachsignale erzeugt und wiedergibt, die Signalisierung auswertet und eine gleichsinnige Signalisierung an die anrufende Teilnehmereinrichtung sendet, worauf die Teilnehmereinrichtungen Sprachsignale mit der niedrigeren Bitrate übertragen und
- daß bei einer angerufenen Teilnehmereinrichtung, die keine mit der niedrigeren Bitrate codierten Sprachsignale erzeugt und wiedergibt, Sprachsignale mit der höheren Bitrate übertragen werden.

Das erfindungsgemäße Verfahren ist an sich an keine Standards für die mit niedrigerer Bitrate codierten Sprachsignale gebunden. Vorzugsweise ist jedoch vorgesehen, daß die Sprachsignale mit der niedrigeren Bitrate ADPCM-Signale mit einer Bitrate von 32 kbit/s sind und daß die höhere Bitrate 64 kbit/s beträgt, insbesondere daß die Sprachsignale mit der niedrigeren Bitrate nach dem DECT-Standard codiert sind.

Die Signalisierung bei dem erfindungsgemäßen Verfahren sollte vorzugsweise verträglich mit den bestehenden Festlegungen des ISDN und der entsprechenden bestehenden Teilnehmereinrichtungen durchgeführt werden. Dieses ist bei einer Weiterbildung der Erfindung möglich, die darin besteht, daß die Signalisierung im ISDN im Oktett 5 des LLC-Elementes im D-Kanal erfolgt.

Gemäß einer anderen Weiterbildung des erfindungsgemäßen Verfahrens ist vorgesehen, daß die Signalisierung im ISDN im Oktett 5a des BC-Elementes im D-Kanal erfolgt. Hierfür ist jedoch eine entsprechende Unterstützung durch das ISDN erforderlich.

Die Erfindung umfaßt ferner die Möglichkeit, daß die Signalisierung im ISDN mit dem Benutzer-Benutzer-Informations-Element (User-User-Information Element) erfolgt. Dabei ist keine Änderung des ISDN erforderlich. Eine Festlegung der Codierung dieses Elementes für die Übertragung mit der niedrigeren Bitrate müßte allerdings noch erfolgen und wäre gegebenenfalls nur für Teilnehmereinrichtungen des gleichen Herstellers anwendbar.

Eine zweite Ausführungsform des erfindungsgemäßen Verfahrens sieht vor,
- daß beim Aufbau einer Verbindung von einer anrufenden Teilnehmereinrichtung, die mit der niedrigeren Bitrate codierte Sprachsignale erzeugt und wiedergibt, im Nutzkanal ein versuchsweises Senden eines mit der niedrigeren Bitrate codierten Sprachsignals durch die anrufende Teilnehmereinrichtung erfolgt,
- daß bei Erkennen eines solchen Sprachsignals durch die angerufene Teilnehmereinrichtung diese auf die Übertragung mit der niedrigeren Bitrate umgeschaltet wird und zur anrufenden Teilnehmereinrichtung mit der niedrigeren Bitrate codierte Sprachsignale sendet, worauf die Teilnehmereinrichtungen während des folgenden Gesprächs mit der niedrigeren Bitrate codierte Sprachsignale senden, und
- daß beide Teilnehmereinrichtungen bei Ausbleiben von mit der niedrigeren Bitrate codierten Sprachsignalen mit der höheren Bitrate codierte Sprachsignale senden.

Ein weiterer Vorteil des erfindungsgemäßen Verfahrens ergibt sich, wenn in einer Teilnehmereinrichtung, vorzugsweise in einem Mobilteil der Teilnehmereinrichtung, verschlüsselte mit der niedrigeren Bitrate codierte Sprachsignale verschlüsselt über das ISDN übertragen werden.

Das erfindungsgemäße Verfahren hat nicht nur den Vorteil, daß die mit den Transcodern verbundenen Nachteile vermieden werden, sondern benötigt auch weniger Übertragungskapazität zwischen den entsprechenden Teilnehmereinrichtungen, insbesondere DECT-Basisstationen. Dies kann in vorteilhafter Weise mit einer anderen Weiterbildung dadurch ausgenutzt werden, daß bei der Übertragung von Sprachsignalen mit der niedrigeren Bitrate ein nicht belegter Teil des Kanals mit der höheren Bitrate zur Übertragung weiterer Signale zwischen den Teilnehmereinrichtungen genutzt wird.

Bei einer erfindungsgemäßen Teilnehmereinrichtung, die mit einer niedrigeren Bitrate codierte Sprachsignale erzeugt und wiedergibt und an ein digitales Telekommunikationsnetz mit Kanälen einer höheren Bitrate anschließbar ist, wird die erfindungsgemäße Aufgabe dadurch gelöst, daß in Abhängigkeit von einer empfangenen Signalisierung zwischen einer Leitungsschnittstelle und einer mit der niedrigeren Bitrate arbeitenden Sprachsignalverarbeitungsschaltung wahlweise ein Transcoder oder ein Multiplexer/Demultiplexer einschaltbar sind. Diese Teilnehmereinrichtung enthält vorzugsweise eine Einrichtung zum Aussenden einer gleichartigen Signalisierung nach einem Verbindungsaufbau zu einer angerufenen Teilnehmereinrichtung.

Eine vorteilhafte Ausgestaltung der erfindungsgemäßen Teilnehmereinrichtung besteht darin, daß die Teilnehmereinrichtung als Basisstation für mindestens ein schnurloses Telefon ausgebildet ist, daß die mit der niedrigeren Bitrate codierten Sprachsignale nach dem DECT-Standard codiert sind und daß der Transcoder einen PCM/ADPCM- und einen ADPCM-Wandler enthält.

Ein Ausführungsbeispiel der Erfindung ist in der Zeichnung anhand mehrerer Figuren in Form von Blockschaltbildern dargestellt und in der nachfolgenden Beschreibung näher erläutert. Es zeigt:
- Fig. 1: eine Basisstation nach dem DECT-Standard, die an das ISDN angeschlossen ist,
- Fig. 2: zwei Basisstationen mit schnurlosen Telefonen am ISDN.

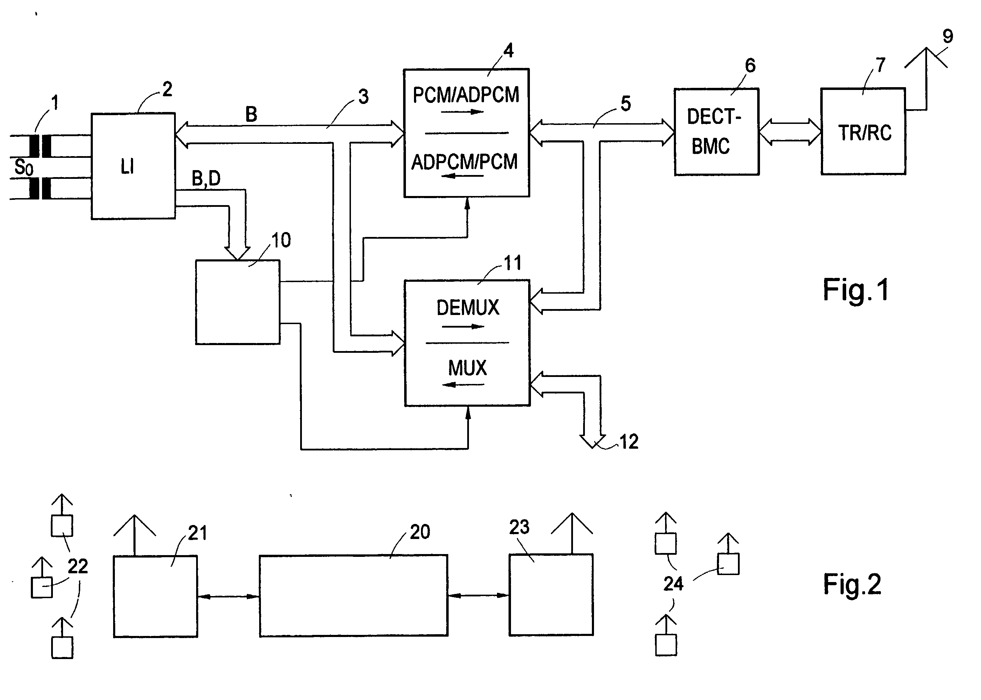

Die in Fig. 1 dargestellte Basisstation ist über zwei Übertrager 1 mit einer S₀-Schnittstelle verbunden, die in an sich bekannter Weise über einen nicht dargestellten Netzabschluß mit dem ISDN verbunden ist. In einer Leitungsschnittstelle (Line Interface LI) 2 werden die über die S₀-Schnittstelle übertragenen Signale an die internen Signalformate umgesetzt. Über einen Bus 3 ist die Leitungsschnittstelle 2 mit einem Transcoder 4 verbunden, der jeweils für eine Richtung einen PCM/ADPCM und einen ADPCM/PCM-Wandler enthält. Ferner ist an den Bus 3 eine Multiplexerschaltung 11 angeschlossen.

Von der Leitungsschnittstelle 2 werden ferner Signale des D-Kanals und des B-Kanals einer Auswertelogik 10 zugeleitet, welche unter anderem das empfangene LLC-Element auswertet. Nimmt dieses einen Wert ein, der einen Übertragungswunsch einer anrufenden Basisstation mit ADPCM-codierten Sprachsignalen signalisiert, werden von der Auswertelogik 10 der Transcoder 4 und die Multiplexerschaltung 11 derart angesteuert, daß der Transcoder 4 deaktiviert und die Multiplexerschaltung 11 aktiviert wird.

Die Multiplexerschaltung 11 besteht aus einem Demultiplexer und aus einem Multiplexer, der im aktivierten Zustand ankommende Signale des B-Kanals in zwei 32kbit/s-Kanäle aufteilt und im B-Kanal abgehende Signale aus zwei 32kbit/s-Kanälen zusammensetzt. Der eine dieser 32kbit/s-Kanäle wird zur Übertragung der Sprachsignale benutzt, wozu die Multiplexerschaltung 11 gemeinsam mit dem Transcoder 4 über einen weiteren Bus 5 mit einem DECT-Burst-Mode-Controller 6 verbunden ist. Dieser steuert die gesamte Multiplextechnik des DECT-Systems und ist mit einem Sender/Empfänger 7 verbunden, der über eine Antenne 9 Signale an Mobilteile sendet bzw. von Mobilteilen empfängt. Ein weiterer 32 kbit/s-Kanal steht für die Übertragung anderer Nachrichten zwischen den jeweils verbundenen Teilnehmereinrichtungen zur Verfügung, wozu an einen Anschluß 12 eine weitere Nachrichtenquelle/-senke angeschlossen werden kann, beispielsweise ein Telefaxgerät oder ein weiteres Sprach-Endgerät mit ADPCM-Codierung.

Fig. 2 zeigt schematisch ein ISDN 20, an das zwei Basisstationen 21, 23 mit jeweils mehreren Mobilteilen 22, 24 angeschlossen sind. Bei einem Verbindungsaufbau von einem der Mobilteile 22 zu einem der Mobilteile 24 fügt die Basisstation 21 in der SETUP-Signalisierung des D-Kanals ein LLC ein, in dessen Oktett 5 angegeben ist, daß es sich um einen Verbindungswunsch mit ADPCM-codierten Sprachsignalen handelt. BC und HLC werden so codiert wie bei einem Verbindungsaufbau für den Teleservice Sprache (Speech). Der Transcoder der Basisstation 21, der die Wandlung von ADPCM nach PCM durchführt, wird aktiviert. Der Verbindungswunsch wird der Gegenstelle 23 mit BC, LLC und HLC in einer SETUP-Signalisierung mitgeteilt, wobei der Inhalt des LLC vom ISDN transparent durchgereicht wird. Die angerufene Basisstation 23 ist ebenfalls nach Fig. 1 aufgebaut. Sie nimmt den Ruf an und signalisiert den Verbindungswunsch zu einem oder mehreren Mobilteilen 24. Sobald nun eines der Mobilteile 24 den Ruf entgegennimmt, wird in der zugehörigen CONNECT-Signalisierung, die von der Basisstation 23 an das ISDN 20 gesendet wird, das gleiche LLC an die Basisstation 21 zurückgesendet.

Die Basisstation 23 mit deaktiviertem Transcoder sendet auf dem Sendepfad in der ersten Hälfte des zugeteilten B-Kanals mit 32 kbit/s codierte Sprachsignale und erwartet in seinem Empfangspfad ebenfalls mit 32 kbit/s codierte Sprachsignale. Da jedoch zunächst noch Sprachsignale eintreffen, die mit 64 kbit/s codiert sind, wird der Transcoder in Empfangsrichtung mit einer geringen Verzögerung deaktiviert.

Die Basisstation 21 deaktiviert nach Empfang der CONNECT-Signalisierung von der Basisstation 23 ihren Transcoder ebenfalls und sendet und empfängt mit 32 kbit/s codierte Sprachsignale in der jeweils ersten Hälfte des zugeteilten B-Kanals.

Durch das Bestehen einer 32-kbit/s-Verbindung vom Endgerät zu Endgerät kann mit Hilfe der Erfindung der DECT-Standard genutzt werden, wie es bisher nur zwischen DECT-Mobilteil und Basisstation genutzt werden konnte. Dazu gehört die Verschlüsselung der Nutzinformation, so daß diese von Dritten nicht mitgehört werden kann. Auf Wunsch wird die Sprachinformation dementsprechend nicht nur auf dem Funkweg, sondern auf dem gesamten Verbindungsweg verschlüsselt. Dazu sind die Mobilteile derart zu gestalten, daß die Verschlüsselung und die Entschlüsselung vollständig innerhalb der Mobilteile durchgeführt werden und nicht Teile der benötigten Funktionen - wie derzeit üblich - von der Basisstation übernommen werden.

## Patentansprüche

1. Verfahren zur Verbindung von Teilnehmereinrichtungen, die mit niedrigerer Bitrate codierte Sprachsignale erzeugen und wiedergeben und mit Codewandlern für eine Übertragung über ein digitales Telekommunikationsnetz mit Kanälen höherer Bitrate versehen sind, **dadurch gekennzeichnet,**
- **daß** beim Aufbau einer Verbindung von einer anrufenden Teilnehmereinrichtung, die mit der niedrigeren Bitrate codierte Sprachsignale erzeugt und wiedergibt, die anrufende Teilnehmereinrichtung der angerufenen Teilnehmereinrichtung signalisiert, daß die anrufende Teilnehmereinrichtung mit der niedrigeren Bitrate codierte Sprachsignale erzeugt und wiedergibt,
- **daß** eine angerufene Teilnehmereinrichtung, die ebenfalls mit der niedrigeren Bitrate codierte Sprachsignale erzeugt und wiedergibt, die Signalisierung auswertet und eine gleichsinnige Signalisierung an die anrufende Teilnehmereinrichtung sendet, worauf die Teilnehmereinrichtungen Sprachsignale mit der niedrigeren Bitrate übertragen und
- **daß** bei einer angerufenen Teilnehmereinrichtung, die keine mit der niedrigeren Bitrate codierten Sprachsignale erzeugt und wiedergibt, Sprachsignale mit der höheren Bitrate übertragen werden.

2. Verfahren nach Anspruch 1, **dadurch gekennzeichnet, daß** die Sprachsignale mit der niedrigeren Bitrate ADPCM-Signale mit einer Bitrate von 32 kbit/s sind und daß die höhere Bitrate 64 kbit/s beträgt.

3. Verfahren nach Anspruch 2, **dadurch gekennzeichnet, daß** die Sprachsignale mit der niedrigeren Bitrate nach dem DECT-Standard codiert sind.

4. Verfahren nach einem der Ansprüche 1 bis 3, **dadurch gekennzeichnet, daß** die Signalisierung im ISDN im Oktett 5 des LLC-Elementes im D-Kanal erfolgt.

5. Verfahren nach einem der Ansprüche 1 bis 3, **dadurch gekennzeichnet, daß** die Signalisierung im ISDN im Oktett 5a des BC-Elementes im D-Kanal erfolgt.

6. Verfahren nach einem der Ansprüche 1 bis 3, **dadurch gekennzeichnet, daß** die Signalisierung im ISDN mit dem Benutzer-Benutzer-Informations-Element erfolgt.

7. Verfahren zur Verbindung von Teilnehmereinrichtungen, die mit niedrigerer Bitrate codierte Sprachsignale erzeugen und wiedergeben und mit Codewandlern für eine Übertragung über ein digitales Telekommunikationsnetz mit Kanälen höherer Bitrate versehen sind, **dadurch gekennzeichnet,**
- **daß** beim Aufbau einer Verbindung von einer anrufenden Teilnehmereinrichtung, die mit der niedrigeren Bitrate codierte Sprachsignale erzeugt und wiedergibt, im Nutzkanal ein versuchsweises Senden eines mit der niedrigeren Bitrate codierten Sprachsignals durch die anrufende Teilnehmereinrichtung erfolgt,
- **daß** bei Erkennen eines solchen Sprachsignals durch die angerufene Teilnehmereinrichtung diese auf die Übertragung mit der niedrigeren Bitrate umgeschaltet wird und zur anrufenden Teilnehmereinrichtung mit der niedrigeren Bitrate codierte Sprachsignale sendet, worauf die Teilnehmereinrichtungen während des folgenden Gesprächs mit der niedrigeren Bitrate codierte Sprachsignale senden, und
- **daß** beide Teilnehmereinrichtungen bei Ausbleiben von mit der niedrigeren Bitrate codierten Sprachsignalen mit der höheren Bitrate codierte Sprachsignale senden.

8. Verfahren nach einem der vorhergehenden Ansprüche, **dadurch gekennzeichnet, daß** in einer Teilnehmereinrichtung, vorzugsweise in einem Mobilteil der Teilnehmereinrichtung, verschlüsselte mit der niedrigeren Bitrate codierte Sprachsignale verschlüsselt über das ISDN übertragen werden.

9. Verfahren nach einem der vorhergehenden Ansprüche, **dadurch gekennzeichnet, daß** bei der Übertragung von Sprachsignalen mit der niedrigeren Bitrate ein nicht belegter Teil des Kanals mit der höheren Bitrate zur Übertragung weiterer Signale zwischen den Teilnehmereinrichtungen genutzt wird.

10. Teilnehmereinrichtung, die mit einer niedrigeren Bitrate codierte Sprachsignale erzeugt und wiedergibt und an ein digitales Telekommunikationsnetz mit Kanälen einer höheren Bitrate anschließbar ist, **dadurch gekennzeichnet, daß** in Abhängigkeit von einer empfangenen Signalisierung zwischen einer Leitungsschnittstelle (2) und einer mit der niedrigeren Bitrate arbeitenden Sprachsignalverarbeitungsschaltung (6) wahlweise ein Transcoder (4) oder ein Multiplexer/Demultiplexer (11) einschaltbar sind.

11. Teilnehmereinrichtung nach Anspruch 10, **gekennzeichnet durch** eine Einrichtung zum Aussenden einer gleichartigen Signalisierung nach einem Verbindungsaufbau zu einer angerufenen Teilnehmereinrichtung.

12. Teilnehmereinrichtung nach einem der Ansprüche 10 oder 11, **dadurch gekennzeichnet, daß** die Teilnehmereinrichtung als Basisstation für mindestens ein schnurloses Telefon ausgebildet ist, daß die mit der niedrigeren Bitrate codierten Sprachsignale nach dem DECT-Standard codiert sind und daß der Transcoder (4) einen PCM/ADPCM- und einen ADPCM-Wandler enthält.

## Claims

1. Method for connecting subscriber devices, which subscriber devices create and reproduce speech signals coded at relatively low bit rates and are equipped with code converters for transmission through a digital telecommunications network with channels of a relatively high bit rate, **characterized in that**
- at setup of a connection from a calling subscriber device, which device produces and reproduces speech signals coded at the lower bit rate, the calling subscriber device signals the called subscriber device that the calling subscriber device produces and reproduces speech signals coded at the lower bit rate,
- a called subscriber device that likewise produces and reproduces speech signals coded at the lower bit rate evaluates the signal and sends a signal with the same meaning to the calling subscriber device, whereupon the subscriber devices transmit speech signals at the lower bit rate, and **in that**
- in the case of a called subscriber device that does not create and reproduce speech signals coded at the lower bit rate, speech signals are transmitted at the higher bit rate.

2. Method according to claim 1, **characterized in that** the speech signals at the lower bit rate are ADPCM signals with a bit rate of 32 Kbits/s and **in that** the higher bit rate is 64 Kbits/s.

3. Method according to claim 2, **characterized in that** the speech signals at the lower bit rate are coded according to the DECT standard.

4. Method according to any one of claims 1 through 3, **characterized in that** the signaling in ISDN takes place in octet 5 of the LLC element in the D channel.

5. Method according to any one of claims 1 through 3, **characterized in that** the signaling in ISDN takes place in octet 5a of the BC element in the D channel.

6. Method according to any one of claims 1 through 3, **characterized in that** the signaling in ISDN takes place with the user-user information element.

7. Method for connecting subscriber devices, which subscriber devices create and reproduce speech signals coded at relatively low bit rates and are equipped with code converters for transmission through a digital telecommunications network with channels of a relatively high bit rate, **characterized in that**
- at setup of a connection from a calling subscriber device, which device produces and reproduces speech signals coded at the lower bit rate, the calling subscriber device makes a trial transmission in the voice/data channel of a speech signal coded at the lower bit rate,
- in the event that such a speech signal is recognized by the called subscriber device, said called device switches to transmission at the lower bit rate and transmits speech signals coded at the lower bit rate to the calling subscriber device, whereupon the subscriber devices transmit speech signals coded at the lower bit rate during the subsequent conversation, and
- in the absence of speech signals coded at the lower bit rate, both subscriber devices transmit speech signals at the higher bit rate.

8. Method according to any one of the preceding claims, **characterized in that** encrypted speech signals coded at the lower bit rate in a subscriber device, preferably in a mobile part of the subscriber device, are transmitted encrypted through the ISDN network.

9. Method according to any one of the preceding claims, **characterized in that** when speech signals are transmitted at the lower bit rate, an unused portion of the channel with the higher bit rate is used to transmit additional signals between the subscriber devices.

10. Subscriber device, which device produces and reproduces speech signals coded at a relatively low bit rate and can be connected to a digital telecommunications network with channels with a relatively high bit rate, **characterized in that** a transcoder (4) or a multiplexer/demultiplexer (11), as desired, can be switched on, as a function of a received signal, between a line interface (2) and a signal processing circuit (2) operating with a relatively low bit rate.

11. Subscriber device according to claim 10, **characterized by** a device for transmitting a signal of the same type after setup of a connection to a called subscriber device.

12. Subscriber device according to any one of claims 10 or 11, **characterized in that** the subscriber device is embodied as a base station for at least one wireless telephone, **in that** the speech signals coded at the lower bit rate are coded according to the DECT standard, and **in that** the transcoder (4) contains a PCM/ADPCM converter and an ADPCM converter.

## Revendications

1. Procédé de connexion d'équipements d'abonné générant et reproduisant des signaux vocaux codés dans un débit binaire inférieur et étant dotés de convertisseurs de code pour transmission via un réseau de télécommunications numérique comprenant des canaux de débit supérieur, **caractérisé en ce que**
- lors de l'établissement d'une liaison à partir d'un équipement d'abonné appelant générant et reproduisant des signaux vocaux codés en débit binaire inférieur, l'équipement d'abonné appelant signale à l'équipement d'abonné appelé que l'équipement d'abonné appelant génère et reproduit des signaux vocaux codés en débit binaire inférieur,
- un équipement d'abonné appelé qui génère et reproduit lui aussi des signaux vocaux codés en débit binaire inférieur analyse le signalement et émet un signalement équivalent à l'équipement d'abonné appelant, les équipements d'abonné transmettant dorénavant des signaux vocaux dans le débit inférieur et
- lorsqu'un équipement d'abonné appelé ne génère et ne reproduit pas de signaux vocaux codés en débit binaire inférieur, les signaux vocaux sont transmis dans le débit supérieur.

2. Procédé selon la revendication 1, **caractérisé en ce que** les signaux vocaux de débit inférieur sont des signaux ADPCM d'un débit de 32 kbit/s, lé débit supérieur étant de 64 kbit/s.

3. Procédé selon la revendication 2, **caractérisé en ce que** les signaux vocaux de débit inférieur sont codés selon la norme DECT.

4. Procédé selon l'une des revendications 1 à 3, **caractérisé en ce que** la signalisation sur RNIS se fait dans l'octet 5 de l'élément LLC, sur le canal D.

5. Procédé selon l'une des revendications 1 à 3, **caractérisé en ce que** la signalisation sur RNIS se fait dans l'octet 5a de l'élément BC, sur le canal D.

6. Procédé selon l'une des revendications 1 à 3, **caractérisé en ce que** la signalisation sur RNIS se fait avec l'élément d'information d'usager à usager.

7. Procédé de connexion d'équipements d'abonné générant et reproduisant des signaux vocaux codés dans un débit binaire inférieur et étant dotés de convertisseurs de code pour transmission via un réseau de télécommunications numérique comprenant des canaux de plus haut débit, **caractérisé en ce que**
- lors de l'établissement d'une liaison à partir d'un équipement d'abonné appelant générant et reproduisant des signaux vocaux codés en débit binaire inférieur, l'équipement d'abonné appelant émet à titre expérimental sur le canal B un signal vocal codé dans le débit inférieur,
- lorsque l'équipement d'abonné appelé identifie un tel signal vocal, ledit équipement bascule sur la transmission au débit inférieur et émet vers l'équipement d'abonné appelant des signaux vocaux codés dans le débit inférieur, les équipements d'abonné émettant lors de la prochaine communication des signaux vocaux codés dans le débit inférieur et
- lorsque ne sont pas émis des signaux vocaux codés dans le débit inférieur, les deux équipements d'abonné émettent des signaux vocaux codés dans le débit supérieur.

8. Procédé selon l'une des revendications précédentes, **caractérisé en ce que**, dans un équipement d'abonné, de préférence dans une partie mobile de l'équipement d'abonné, des signaux vocaux cryptés codés dans le débit inférieur sont transmis sur le RNIS sous forme cryptée.

9. Procédé selon l'une des revendications précédentes, **caractérisé en ce que**, lors de la transmission de signaux vocaux dans le débit inférieur, une partie non occupée du canal de débit supérieur est utilisée pour la transmission d'autres signaux entre les équipements d'abonnés.

10. Equipement d'abonné générant et reproduisant des signaux vocaux codés en un débit binaire inférieur et raccordable à un réseau de télécommunications numérique comprenant des canaux d'un débit binaire supérieur, **caractérisé en ce qu'** un transcodeur (4) ou un multiplexeur/démultiplexeur (11) sont au choix activables en fonction de la réception d'un signalement entre une interface de la ligne (2) et un montage de traitement du signal vocal (6).

11. Equipement d'abonné selon la revendication 10, **caractérisé par** un équipement servant à l'émission d'un signalement équivalent après établissement d'une liaison avec un équipement d'abonné appelé.

12. Equipement d'abonné selon l'une des revendications 10 ou 11, **caractérisé en ce que** l'équipement d'abonné est conçu comme station de base pour au moins un téléphone sans fil, **en ce que** les signaux vocaux codés dans le débit binaire inférieur sont codés selon la norme DECT et **en ce que** le transcodeur (4) comprend un convertisseur PCM/ADPCM et un convertisseur ADPCM.
